# EUROPÄISCHE PATENTSCHRIFT

(11) **EP 1 443 342 B1**
(45) Veröffentlichungstag und Bekanntmachung des Hinweises auf die Patenterteilung: **14.11.2007**
(21) Anmeldenummer: 04001477.1
(22) Anmeldetag: 23.01.2004
(51) Int. Cl.: G01S 7/521, G10K 11/00, B60R 19/48, B06B 1/00

(54) **Topfförmiges Wandlergehäuse mit Membranaufnahme für einen Ultraschallsensor**
Pot-shaped transducer housing with membrane support for an ultrasonic sensor
Boitier de transducteur en forme de pot supportant une membrane pour un capteur ultrasonique

(30) Priorität: 01.02.2003 DE 10304001
(43) Veröffentlichungstag der Anmeldung: 04.08.2004
(73) Patentinhaber: Valeo Schalter und Sensoren GmbH, 74321 Bietigheim-Bissingen (DE)
(72) Erfinder: Kupfernagel, Uwe, 71665 Vaihingen (DE); Gotzig, Heinrich, Dr., 74081 Heilbronn (DE)
(74) Vertreter: Bulling, Alexander

(56) Entgegenhaltungen:
- EP-A- 0 678 853
- EP-A- 1 083 099
- DE-A- 10 139 341
- DE-A- 19 727 877
- DE-A- 19 912 772

## Beschreibung

Die Erfindung betrifft eine topfförmige Membrane für einen Sensor, insbesondere einen Ultraschallsensor, sowie einen Sensor, insbesondere einen Ultraschallsensor. Bekannte Ultraschallsensoren umfassen ein Gehäuse, eine Sensorelektronik und eine topfförmige Membrane, die in einer Membranaufnahme innerhalb des Gehäuses angeordnet ist. Die topfförmige Membrane weist ihrerseits einen Membranboden und eine sich an den Membranboden anschließende Membranwandung auf.

Derartige Sensoren dienen zur Erfassung des Umgebungsbereiches von Kraftfahrzeugen. Mit ihnen kann der Abstand des Kraftfahrzeuges zu das Kraftfahrzeug umgebenden Objekten bestimmt werden. Nähert sich beispielsweise das Fahrzeug einem Gegenstand, beispielsweise einem parkenden Fahrzeug, so kann mittels den Sensoren der Abstand zwischen Fahrzeug und Gegenstand bestimmt werden. Bei Unterschreiten eines vorgegebenen Sicherheitsabstandes wird beispielsweise ein akustisches und/oder optisches Signal an den Fahrer des Kraftfahrzeuges abgegeben.

Für eine genaue Funktionsfähigkeit eines derartigen Sensors ist es erforderlich, die einzelnen Bauteile des Sensors innerhalb des Sensorgehäuses sehr genau zueinander zu positionieren. Insbesondere die Membrane ist beim Montagevorgang des Sensors in einer positionsgenauen Lage festzusetzen. Zur Abdichtung und Festsetzung der Bauteile des Sensors wird das Sensorgehäuse beispielsweise mit einer Vergussmasse befüllt.

Aus der DE 101 39 341 A1 sind Ultraschallsensoren mit einer eingangs beschriebenen Membrane bekannt geworden, bei denen auf der Innenseite des Membranbodens sich ein piezoelektrisches Element befindet, das den Membranboden in Schwingung versetzt beziehungsweise vom Membranboden erfasste Schwingungen aufnimmt. Die Abstrahlcharakteristik der Membran hängt von der Membrangeometrie beziehungsweise der Dicke des Membranbodens der Membranwandung und von der Geometrie des piezoelektrischen Elements ab. Je nach Wahl der genannten Faktoren können Ultraschallsensoren mit in beispielsweise waagrechter Richtung relativ großen Detektionsbereichen und in horizontaler Richtung relativ geringen Detektionsbereichen bereitgestellt werden. Bei nicht positionsgenauem Einbau der Membrane verändert sich der vorgesehene Detektionsbereich des Sensors.

Ähnliche Membranen sind in der DE 197 27 877 A1 beschrieben, wobei dort mit dem Begriff Gehäuse das gleiche gemeint ist wie mit dem hier verwendeten Begriff Membrane. Bei diesen vorbekannten Gehäusen ist an der Außenseite der Wandung des Gehäuses von der Oberkante beabstandet ein in radialer Richtung weisenden Stabilisierungsring angeordnet. Dadurch wird eine größere Steifigkeit der Membrane bzw. des Gehäuses erreicht, so dass der verbleibende Teil der Bodenfläche der Membrane als Schwingungsmembrane wirkt.

Der vorliegenden Erfindung liegt die Aufgabe zugrunde, die Montagesicherheit der bekannten Sensoren zu erhöhen, wobei insbesondere eine nicht positionsgenaue Anordnung der Membrane innerhalb des Membrangehäuses ausgeschlossen werden soll.

Diese Aufgabe wird dadurch gelöst, dass ein an der Oberkante der Membran vorgesehener, sich nach radial außen erstreckender Ansatz vorgesehen wird, dessen Außengeometrie derart ausgebildet ist, dass sie in lediglich einer vorgegebenen Montagelage in der Membranaufnahme des Gehäuses verbaubar ist. Hierdurch wird erreicht, dass ein falsches Einsetzen der Membrane in die Membranaufnahme beim Montagevorgang sofort bemerkt wird beziehungsweise im Idealfall nicht erfolgen kann. Dadurch wird die Montagesicherheit erhöht und der Ausschuss an falsch montierten, und damit ungenau messenden Sensoren erheblich verringert.

Insbesondere dann, wenn die Membrane und/oder das piezoelektrische Element keine rotationssymmetrische Geometrie aufweist, führt die Erfindung zu einer besonders großen Vereinfachung der Montage und zu einer erhöhten Montagesicherheit.

Vorteilhafterweise kann vorgesehen sein, dass der Ansatz ringbundartig um die Oberkante der Membranwandung umlaufend und die Außengeometrie des Ansatzes nicht rotationssymmetrisch ausgebildet ist. Ein ringbundartig umlaufender Ansatz an der Oberkante hat den Vorteil, dass das Schwingungsverhalten der Membrane durch Vorsehen des Ansatzes gleichmäßig beeinflusst wird und sich damit nicht nachteilig auf die Abstrahlcharakteristik auswirkt. Aufgrund der nicht rotationssymmetrischen Ausbildung der Außengeometrie des Ansatzes kann erreicht werden, dass die Membrane lediglich in einer Montagelage in der Membranaufnahme verbaut werden kann.

Erfindungsgemäß ist denkbar, die Außengeometrie des Ansatzes in Draufsicht rechteckartig auszubilden. Die Draufsicht entspricht der Sicht entlang der Längsachse der Membrane. Eine rechteckige Ausbildung weist vorteilhafterweise abgerundete Ecken auf, die insbesondere einen relativ großen Radius haben können, um das Abstrahlverhalten der Membrane nicht negativ zu beeinflussen.

Erfindungsgemäß ist außerdem denkbar, dass die Außengeometrie des Ansatzes in Draufsicht ellipsenartig oder oval ausgebildet ist. Auch derartige Außengeometrien beeinträchtigen das Abstrahlverhalten der Membrane nicht nachteilig.

Eine weitere Ausführungsform der Erfindung ergibt sich dann, wenn die Außengeometrie des Ansatzes in radialer und/oder axialer Richtung verlaufende Vertiefungen und/oder Erhebungen aufweist, die mit an der Membranaufnahme vorgesehenen Vertiefungen und/oder Erhebungen korrespondieren. Prinzipiell ist ausreichend, lediglich eine Erhebung beziehungsweise Vertiefung und eine korrespondierende Vertiefung beziehungsweise Erhebung vorzusehen. Die miteinander korrespondierenden Vertiefungen und/oder Erhebungen greifen dabei vorteilhafterweise wenigstens weitgehend formschlüssig ineinander. Als Vertiefungen und/oder Erhebungen können beispielsweise Stege, Zapfen, Zentrierwülste, Zentriererhebungen oder dergleichen mit zugehörigen komplementären Geometrien Verwendung finden.

Hierbei ist denkbar, dass die Vertiefungen und/oder Erhebungen auf der radial außen liegenden, dem Boden zugewandten Unterseite des Ansatzes angeordnet sind. Dies ist deshalb vorteilhaft, weil die Montagerichtung der Membrane in der Regel die Axialrichtung ist. Beim axialen Einführen der Membrane in die Membranaufnahme kann aufgrund einer entsprechenden Anordnung der Vertiefungen und/oder Erhebungen eine Führung der Membrane in die vorgegebene Endmontagelage erreicht werden.

Eine weitere Ausgestaltung der Erfindung sieht vor, dass die Oberseite des Ansatzes in einer Ebene liegend ausgebildet ist. Diese Ebene ist vorzugsweise eine gerade Ebene.
Die eingangs genannte Aufgabe wird außerdem gelöst durch einen Sensor, insbesondere einen Ultraschallsensor, der eine erfindungsgemäße topfförmige Membrane umfasst.

Weitere vorteilhafte Einzelheiten und Ausgestaltungen der Erfindung sind der folgenden Beschreibung zu entnehmen, in der die Erfindung anhand der in der Zeichnung dargestellten Ausführungsform näher beschrieben und erläutert ist.

Es zeigen:
- Figur 1: eine perspektivische Darstellung auf die Unteransicht einer erfindungsgemäßen Membrane
- Figur 2: die Draufsicht auf die Membrane gemäß Figur 1; und
- Figur 3: die Seitenansicht der Membrane gemäß Figur 2

Die in den Figuren dargestellte Membrane 10 ist topfförmig ausgebildet und weist einen Membranboden 12, eine sich an den Membranboden 12 anschließende, ringartige Membranwandung 14 und einen sich an der Oberkante der Membranwandung 14 angeordneten, sich nach radial außen erstreckenden Ansatz 16 auf. Der Ansatz 16 ist ringbundartig ausgebildet und umläuft die Oberkante der Wandung 14. Erfindungsgemäß kann allerdings vorgesehen sein, dass der Ansatz 16 nicht ringbundartig ausgebildet ist, sondern nur abschnittsweise vorhanden ist.

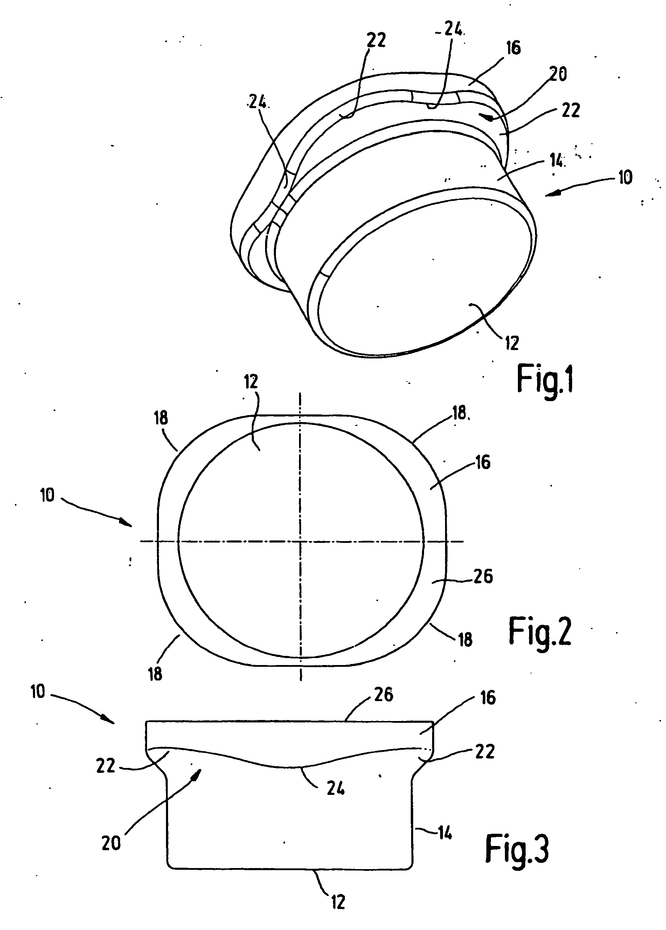

Wie aus den Figuren 1 bis 3 deutlich wird, ist der Ansatz 16 nicht rotationssymmetrisch ausgebildet. Vielmehr ist er in Draufsicht gemäß Figur 2 rechteckartig mit abgerundeten Eckbereichen 18 ausgebildet. Anstelle einer rechteckartigen Ausbildung ist erfindungsgemäß ebenfalls denkbar, die Außengeometrie des Ansatzes 16 in Draufsicht ellipsenartig oder oval auszubilden.

Aus den Figuren 1 und 3 wird deutlich, dass der Ansatz 16 auf der radial außen liegenden, dem Boden 12 zugewandten Unterseite 20 vertiefte Bereiche 22 und erhabene Bereiche 24 aufweist. Diese Bereiche 22 und 24 korrespondieren mit nicht dargestellten Vertiefungen und Erhebungen einer nicht dargestellten Membranaufnahme eines Sensorgehäuses. Die Bereiche 22, 24 sind dabei vorteilhafterweise komplementär zu den Vertiefungen und Erhebungen der Membranaufnahme ausgebildet.

Durch Vorsehen der vertieften Bereiche 22, der erhabenen Bereiche 24 und der in Draufsicht rechteckartigen Ausbildung des Ansatzes 16 wird erreicht, dass die Membrane 10 in einer vorgegebenen Montagelage in einer nicht dargestellten Membranaufnahme verbaubar ist. Dadurch wird verhindert, dass die Membrane 10 in einer positionsungenauen Lage innerhalb des Sensorgehäuses montiert wird.

Zur Erreichung dieser Aufgabe ist es nicht zwingend erforderlich, dass sowohl die Außengeometrie des Ansatzes in Draufsicht rechteckartig ausgebildet ist, als auch Bereiche 22, 24 vorgesehen sind. Um eine positionsgenaue, eindeutige Montagelage zu erreichen, genügt dass entweder die Außengeometrie des Ansatzes in Draufsicht rechteckartig ausgebildet ist oder dass die Bereiche 22, 24 vorgesehen sind.

Aus Figur 3 wird deutlich, dass die Oberseite 26 des Ansatzes 16 in einer geraden Ebene liegend ausgebildet ist.

## Patentansprüche

1. Topfförmige Membrane (10) für einen Ultraschallsensor, mit einem Membranboden (12), mit einer sich an den Membranboden (12) anschließenden Membranwandung (14), wobei an der Oberkante der Membranwandung ein sich nach radial außen erstreckender, ringbundartig um die Oberkante der Membranwandung (14) umlaufender Ansatz (16) vorgesehen ist,
wobei die Außengeometrie des Ansatzes (16) zum einen in Draufsicht rechteckartig mit abgerundete Ecken, ellipsenartig oder oval ausgebildet ist, **dadurch gekennzeichnet, dass** die Außengeometrie des Ansatzes (16) zum anderen in axialer Richtung verlaufende Vertiefungen (22) und/oder Erhebungen (24) aufweist, die auf der radial außen liegenden, dem Membranboden zugewandten Unterseite (20) des Ansatzes (16) angeordnet sind und die mit an der Membranaufnahme vorgesehenen Vertiefungen und/oder Erhebungen korrespondieren,
so dass die Membrane in lediglich einer vorgegebenen Montagelage in einer Membranaufnahme verbaubar ist.

2. Membrane (10) nach Anspruch 1,
**dadurch gekennzeichnet, dass** die Oberseite des Ansatzes in einer Ebene liegend ausgebildet ist.

## Claims

1. A cup-shaped diaphragm (10) for an ultrasound sensor, having a diaphragm bottom (12) with a diaphragm wall (14) adjoining the diaphragm bottom (12), wherein a shoulder (16) is provided at the upper edge of the diaphragm wall, which extends radially outward and in the manner of an annual collar around the upper edge of the diaphragm wall (14), wherein, in a view from above, the exterior geometry of the shoulder (16) is for one designed to be rectangular-shaped with rounded corners, ellipse- shaped or oval, **characterized in that**, on the other hand, the exterior geometry of the shoulder (16) has depressions (22) and/or raised sections (24) extending in the axial direction, which are arranged on the radially outside located underside (20), facing the diaphragm bottom, of the shoulder (16) and which correspond to depressions and/or raised sections provided on the diaphragm receptacle, so that the diaphragm can only be installed in one predetermined mounted position in a diaphragm receptacle.

2. The diaphragm (10) in accordance with claim 1, **characterized in that** the top of the shoulder has been designed to lie on one level.

## Revendications

1. Membrane en forme de pot (10) pour un capteur à ultrasons, avec un fond de membrane (12) comportant une paroi de membrane (14) se raccordant au fond de la membrane (12), sur le bord supérieur de la paroi de la membrane étant prévu un prolongement (16), en forme de collerette, s'étendant à l'extérieur, radialement autour de la paroi de la membrane (14),
d'une part la géométrie extérieure du prolongement (16), vue de dessus, étant de forme rectangulaire avec des coins arrondis, de forme écliptique ou ovale, **caractérisée en ce que** la géométrie extérieure du prolongement (16) présente d'autre part des creux (22) et/ou des bossages (24) s'étendant dans la direction axiale, qui sont disposés sur la face inférieure (20) du prolongement (16), tournée vers le fond de la membrane et placée radialement à l'extérieur, et qui coïncident avec les creux et/ou les bossages du logement de la membrane, de sorte que la membrane peut être intégrée simplement dans un logement de membrane, dans l'une des positions de montage prédéfinies.

2. Membrane (10) selon la revendication 1, **caractérisée en ce que** la face supérieure du prolongement est réalisée dans le même plan.
